# EUROPEAN PATENT APPLICATION

(11) **EP 0 805 011 A1**
(43) Date of publication of application: **05.11.1997**
(21) Application number: 96303146.3
(22) Date of filing: 03.05.1996
(51) Int. Cl.: B29B 17/02, C08J 11/08

(54) **Method and apparartus for collecting magnetic particles and base film separately from magnetic film waste**

(71) Applicant: MITSUBISHI CORPORATION, Chiyoda-ku Tokyo (JP); HOKOKU ENGINEERINGS CO., LTD., Urawa-shi, Saitama (JP)
(72) Inventor: Kaga, Makoto, Hachioji-shi, Tokyo (JP)
(74) Representative: Charlton, Peter John

(57) **Abstract**

A method and an apparatus for separating magnetic particles from a magnetic film waste and collecting the magnetic particles and a base film separately are disclosed. A magnetic film waste is put into a processing tank **5**, which has a transverse cross-section selected from a triangular, square, or pentagonal shape and a lower portion **5b** defined as a reversed conical portion with an inner diameter thereof gradually reduced in a downward direction. A treatment liquid for processing includes esters, ketones, aromatic solvents, and a surface active agent. The magnetic film waste is stirred with the treatment liquid in the tank **5** using a rotor **R** having a rotation shaft **1** and a plurality of stirring frames **3**. The rotation shaft **1** is vertically disposed at the bottom of the processing tank **5** and the stirring frames **3** projecting from the rotation shaft **1** in a radial direction. A distance **S**_{**1**} between radially end portions of the stirring frames **3** and an inner surface of the tank **5** are arranged constant along a longitudinal direction of the rotation shaft **1**. The rotation shaft **1** is rotated in a normal and a reverse directions alternatively. After processing, a mixture of the magnetic particles and the treatment liquid is discharged out of the tank **5** via a discharging port **11** and the processed film after removal of the magnetic particles is collected through an outlet port **10**.

## Description

### BACKGROUND OF THE INVENTION

### Field of the Invention

The present invention relates to a method and an apparatus for disposing a waste of used magnetic recording media such as magnetic tapes, video tapes, floppy disks, and magnetic cards, and a waste from a manufacturing process thereof by separating magnetic particles from a magnetic film waste and collecting them separately.

### Description of the Related Art

Magnetic recording media used for computers or the like, such as magnetic tapes, video tapes, floppy disks, and magnetic cards, are formed by coating a magnetic particles on a resin film such as polyethylene terephthalate film (hereinafter referred to as PET film).

Manufacturing of the magnetic recording media, however, produces a waste, which amounts to 10 to 30 percent of original raw material of a magnetic film since the manufacturing process accompanies a step of obtaining a predetermined shape of the magnetic film by cutting the film onto which magnetic particles are coated. Annual amount of the waste reaches approximately 50,000 tons. The total amount of the waste including used media is estimated twice as much as the afore-mentioned figure.

Since most part of the magnetic film waste is incinerated or landfilled, disposal method of the magnetic film waste is becoming a social problem from view points of not only waste of resources to be recycled but also an environmental pollution and difficulty in finding a place for disposal.

In view of such a current situation, implementation of the recycling process of the magnetic film waste is strongly desired so as to settle the social problems such as a public pollution as well as effective utilization of resource and cost reduction of the magnetic film products. In order to achieve the aim, it is required to take out magnetic particles and base films from the magnetic film waste separately. A conventional agitating or grinding apparatus for a powder product is unable to perform such a separating operation but to shred the magnetic films into pieces.

On the other hand, some portion of used PET film products are recycled in the United States and Germany using a process typically including the following steps of:
a) depolymerizing PET films into monomers such as ethylene glycol and terephthalic acid;
b) polymerizing the respective monomers to recover PET film material; and
c) collecting other substances such as catalysts and magnetic particles separately.

The above recovery method for PET film requires, however, very large scale facilities and enormous investment for them, thus it may not be feasible to implement this kind of recovery system in middle and small scale businesses.

### SUMMARY OF THE INVENTION

An object of the present invention is to provide a method and apparatus for disposing a magnetic film waste including used magnetic recording media and a waste resulted from a manufacturing process thereof by separating magnetic particles from the magnetic films and collecting the magnetic particles and the base films separately.

To accomplish these and other objects of the invention, according to one aspect of the present invention, a method for separating magnetic particles from a magnetic film waste and collecting the magnetic particles and a base film thereof separately, comprises the following steps of providing the magnetic film waste for a container having a polygonal transverse cross-section, providing treatment liquid including a plurality of solvents therein for the container, stirring the magnetic film waste and the treatment liquid in the container using stirring means having a rotation shaft and a plurality of stirring members, the rotation shaft vertically disposed at the bottom of the container, the stirring members perpendicularly projecting from the rotation shaft, discharging a mixture of the magnetic particles and the treatment liquid out of the container, and collecting the magnetic film waste from which the magnetic particles are removed.

An apparatus according to one aspect of the present invention, for separating magnetic particles from a magnetic film waste and collecting the magnetic particles and a base film thereof separately, comprises a container having a polygonal transverse cross-section, and stirring means having a rotation shaft and a plurality of stirring members, the rotation shaft vertically disposed at the bottom of the container, the stirring members perpendicularly projecting from the rotation shaft.

Still other objects and advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawing and description are to be regarded as illustrative in nature, and not as restrictive.

### BRIEF DESCRIPTION OF THE DRAWINGS

**Fig. 1** shows a schematic plan view of a processing tank according to one embodiment of the present invention;
**Fig.2** is a schematic plan view of a processing tank according to another embodiment of the present invention;
**Fig.3** shows a schematic plan view of a processing tank according to yet another embodiment of the present invention;
**Fig.4** is an elevational view of a rotor with stirring plates according to one embodiment of the present invention;
**Fig.5** is a perspective view of a rotor with stirring frames according to one embodiment of the present invention;
**Fig.6** shows an elevational view of a rotor with stirring plates having teeth-like projections along the outer periphery thereof, according to one embodiment of the present invention; and
**Fig.7** is a schematic cross-sectional view of an apparatus according to the present invention.

### DESCRIPTION OF PREFERRED EMBODIMENTS AND BEST MODE FOR CARRYING OUT THE INVENTION

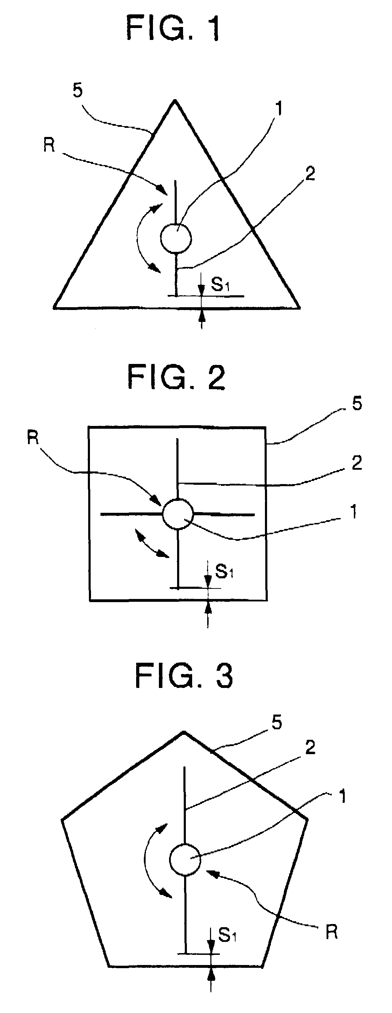

To accomplish the above-mentioned and other objects of the present invention, respective shapes of a processing tank and a rotor rotating in it have great significance. As shown in **Figs.1** to **3**, a transverse cross-section of the processing tank **5** is selected from a triangular, a square, or a pentagonal shape unlike a circular cross-section of conventional mixing or grinding tanks. Preferably, a square cross-section is employed for the processing tank **5**. As far as the transverse cross-section is in such a shape, there is no restriction for a shape of a longitudinal cross-section. However, it is preferable to employ a rectangle, a reversed conical shape, or a shape defined as combinations of them.

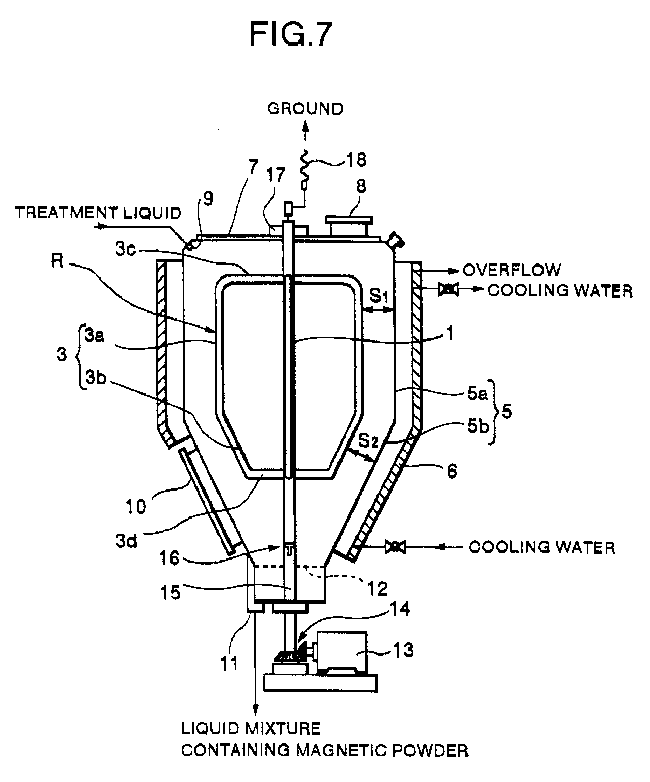

It is preferable to take stainless steel as material of the processing tank **5**, though, this does not exclude any possibility to adopt other materials like ceramics. Referred further to **Fig.7**, at the upper portion **5a** of the processing tank **5**, there disposed an inlet port **8** for a magnetic film waste to be processed, and an inlet port **9** for treatment liquid. At the lower portion **5b** of the tank **5**, an outlet port **10** for taking out the processed base film such as a PET film from which magnetic particles have been removed and a discharging port **11** for discharging liquid mixture containing magnetic particles collected from the waste and the treatment liquid.

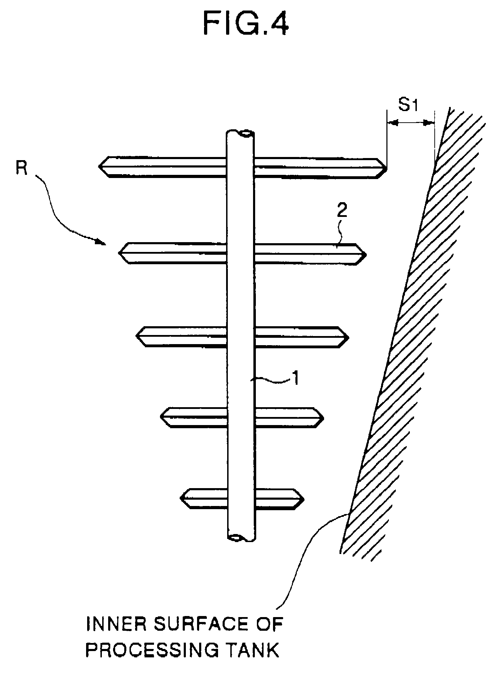

A rotor **R** is disposed in the processing tank **5** with the center axis corresponding to the center of the tank **5**. As shown in **Fig.4**, the rotor **R** is equipped with a plurality of stirring plates **2** perpendicularly projecting from a rotation shaft **1**. Alternatively, the rotor **R** may be provided with a plurality of stirring frames **3** longitudinally extending along the rotation shaft **1** and fastened to the rotation shaft **1** at the both ends thereof. Each of the stirring plates **2** or the stirring frames **3** may be shaped into a flat plate or a rod. Preferably, members constituting the stirring plate **2** and stirring frame **3** may have a rectangular cross-section without being twisted so that a stirring resistance of the plate **2** or frame **3** becomes greater. In case of processing irregularly thicker magnetic films, it is desirable to equip the plate **2** or frame **3** with teeth-like projections **4** along the outer periphery thereof for cutting the magnetic film waste into smaller strips during processing. The number of the stirring plates **2** or stirring frames **3** may be determined according to the processing tank capacity. However, it is preferable to arrange two to four plates or frames with the rotation shaft **1** in many cases since increase of the number of the stirring members will cause excessive driving power to rotate the rotation shaft **1** during processing.

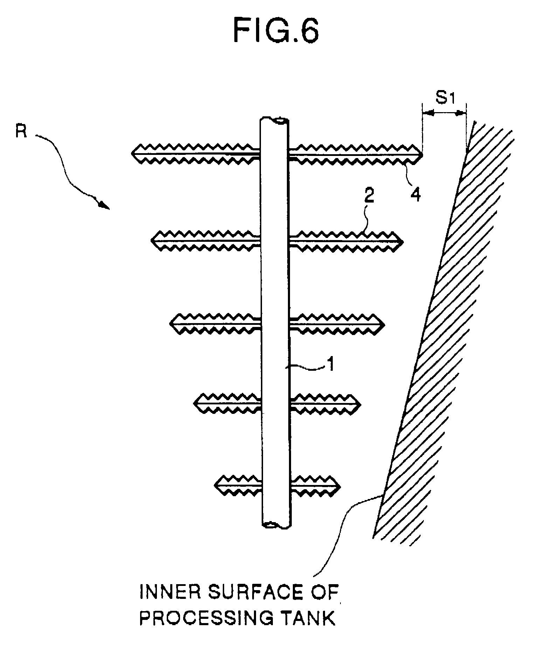

With respect to the dimensional relationship between the stirring plate **2** or frame **3** and the processing tank **5**, a distance **S**_{**1**} between radially end portions of the stirring plates **2** or frames **3** and an inner surface of the processing tank **5** should be set substantially constant along a longitudinal direction of the rotation shaft. More specifically, as shown in **Figs.4** to **6**, a length of each of the stirring plates **2** and stirring frames **3** becomes shorter in downward direction along the rotation shaft **1** in order to keep an equal distance **S**_{**1**} between radially end portions and the inner surface of the processing tank **5** when the rotor **R** is installed in the processing tank **5** having a longitudinal cross-section of a reversed conical shape. Although an appropriate distance **S**_{**1**} may be varied depending on a property of the magnetic film to be processed and a capacity of the processing tank **5**, a typical value of 10 cm will be employed in many cases.

Since the processing tank **5** and the rotor **R** are so shaped as described above, stirring of the treatment liquid by the rotor **R** causes an extreme turbulence and an ascending flow in the processing tank **5**, the magnetic film waste collides with the inner surface of the processing tank **5**, specifically with recessed ridge portions in the tank **5** as moved therein. It is considered that repetition of the collision may remove the magnetic particles from the base film of the magnetic film waste. In order to fully utilize this removal effect by the collision, no rounding should be made to the recessed ridge portions.

The treatment liquid accelerates the separation of the magnetic particles from the film by swelling a binder fixing the magnetic particles to the base film. Therefore, the treatment liquid is prepared by mixing a plurality of selected solvents according to a property of the binder. The typical treatment liquid contains esters, ketones, aromatic solvents of 20 to 60 weight percent, respectively, and a surface active agent. For processing video tapes as the magnetic film waste, it is preferable to employ a treatment liquid further including ethers.

There is no clear-cut limitation to a capacity of the processing tank **5** and to an amount of the magnetic film waste and the treatment liquid, however, an excessive capacity of the processing tank **5** results in degradation of separation efficiency of the magnetic particles. Therefore, a processing tank **5** with a capacity of 300 to 5,000 liters may be preferably employed to receive a magnetic film waste of 3 to 5 volumetric percent and a treatment liquid of 10 to 15 volumetric percent against the processing tank capacity, respectively. It should be noted that an apparent specific gravity of the magnetic film waste comprising a PET film with magnetic particles coated thereon is 0.03 to 0.05.

Rotational speed of the rotor **R** may be varied according to such factors as a density, a flexibility, a thickness, an amount of a film included in the magnetic film waste to be processed. However, an appropriate rotational speed may be typically selected from between 250 to 800 rpm. Furthermore, a rotational direction of the rotor **R** may be preferably reversed every predetermined time period or every one revolution of the rotor so as to avoid maldistribution of the magnetic film waste in the processing tank **5**.

The process of disposing the magnetic film waste usually takes 45 to 90 minutes to separate magnetic particles from the base film, though the process time may be varied based on the amount of the waste, a thickness of magnetic particles applied to the base film. In this process of the present invention, the film itself is hardly broken or damaged.

Without taking appropriate measures, a temperature in the processing tank **5** rises due to frictional heat and the like during processing to cause the treatment liquid to deteriorate. To avoid this disadvantage, it is preferable to cool the treatment liquid by suitable means to maintain the liquid 30 to 45 °C according to the composition of the treatment liquid employed.

The processing tank **5** is also electrostatically charged due to friction with the magnetic film waste therein. This static electricity may cause secondary agglomeration of the magnetic particles once separated from the base film or explosion of the tank **5**. It is preferable to equip the processing tank **5** and/or the rotor **R** with a static electricity removing device to suppress and avoid the above phenomenon. One example of the suitable devices is a grounding device comprising a conductor wire disposed in the rotor **R** or the rotor **R** formed with electric conductive material, the wire or the rotor **R** is grounded via a conductor.

It should be noted that the apparatus of the present invention is able to be operated automatically using a computer in which various operational parameters for different conditions depending on a property of the magnetic film waste to be processed and so on.

Referring to **Fig.7**, a separating and collecting apparatus of magnetic particles and a base film from a magnetic film waste according to one embodiment of the present invention will be described herebelow. A processing tank **5** of the apparatus is a container with an opening at the top thereof, which is formed with stainless steel having a square transverse cross-section. An upper portion **5a** of the tank **5** has a longitudinal cross-section of rectangular shape. A lower portion **5b** of the tank **5** is substantially defined as an inverted square conical shape. On the outer side periphery of the tank **5** is disposed a cooling water jacket **6** for cooling the processing tank **5**, through which cooling water is circulated by a driving pump (not shown).

The top opening of the processing tank **5** is covered with a detachable lid **7**. An inlet port **8** for introducing a magnetic film waste into the tank **5** is disposed on the detachable lid **7**. On the upper portion of the side wall of the tank **5** there disposed an inlet port **9** for charging treatment liquid in the tank **5**.

On the side wall of the lower portion **5b** of the processing tank **5** is provided an outlet port **10** for taking out the film from which magnetic particles have been removed. At the lower most portion of the lower portion **5b** of the processing tank **5** is disposed a discharging port **11** for discharging a mixture containing the treatment liquid and the magnetic particles separated from the magnetic film waste. A filter **12** is equipped between the bottom portion of the lower portion **5b** of the processing tank **5** and the discharging port **11** so as not to allow the processed film to flow out of the tank **5** through the discharging port **11**.

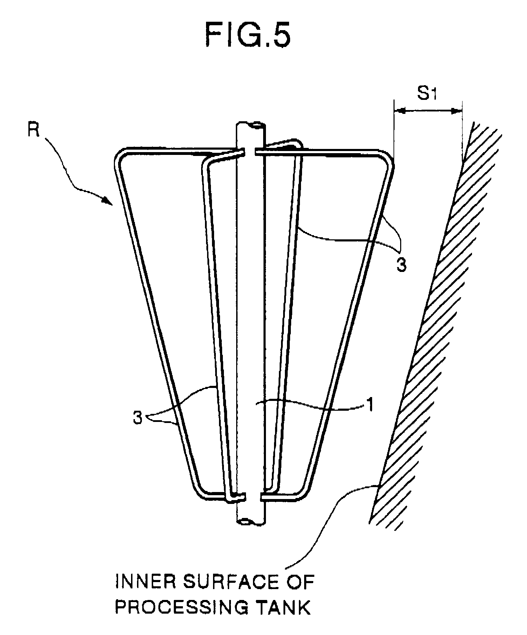

A rotor **R** is rotatably installed in the processing tank **5** with a rotation shaft **1** thereof corresponding to the center axis of the tank **5**. The rotation shaft **1** is connected to a driving shaft **15** projecting from the bottom portion of the lower portion **5b** of the tank **5** with a connector **16** at the lower end portion thereof. The driving shaft **15** is driven by a motor **13** via a transmission gears **14**. The upper end portion of the rotation shaft **1** is rotatably supported by a bearing **17** disposed on the detachable lid **7**. The rotor **R** comprises, as shown in **Fig.5**, a plurality of stirring frames **3** fixed to the rotation shaft **1** at the both ends thereof. Each of the stirring frames **3** has a pair of longer and shorter horizontal rods **3c**,**3d** and a series of a vertical rod **3a** and an inclined rod **3b** joining respective radially end portions of the horizontal rods **3c,3d**. The vertical rod **3a** of the stirring frame **3** is disposed parallel to the inner surface of the upper portion **5a** of the processing tank **5** with maintaining a distance **S**_{**1**} therebetween. The inclined rod **3b** is disposed parallel to the inner surface of the lower portion **5b** of the tank **5** with maintaining a distance **S**_{**2**} therebetween. As described above, the distances **S**_{**1**} and **S**_{**2**} are defined to have an equal value, e.g., 10 cm, according to given conditions such as a capacity of the processing tank **5**.

The rotor **R** is formed with stainless steel and a conductor wire is arranged therethrough. The conductor wire is connected to a lead wire **18**, which is grounded.

Subsequently, using the apparatus described above, a magnetic film waste was processed. The processed magnetic film waste was those from a manufacturing process of a floppy disk comprising a PET film of 80 µm thickness, coated with magnetic particles kneaded with a binder. The waste was broken into pieces, each piece thereof being a sheet of approximately 15 cm square.

The floppy disk waste of 10 kg was placed into the processing tank **5** of 300 liters through the inlet port **8**. A treatment liquid of 30 liters containing methyl ethyl ketone, methylbenzene, acetic ester of three nineteenth (3/19), respectively, and a surface active agent of ten nineteenth (10/19), was supplied into the tank 5 via the inlet port 9.

The rotor **R** having the stirring frames **3** shown in **Fig. 5** was rotated as repeating a normal and reverse rotations. A rotational speed started at 250 rpm and then was gradually increased up to 300 rpm for 50 minutes. A liquid temperature in the processing tank **5** was maintained at 40 °C during the process.

After the processing, the liquid mixture containing magnetic particles was discharged through the discharging port **11**. The mixture was then filtered to collect magnetic particles. The treatment liquid from which magnetic particles were removed, was reused for another processing of a magnetic film waste. An amount of the collected magnetic particles was 0.3 kg, which means that almost all magnetic particles originally contained in the proceased magnetic film waste was recovered. The PET film of 9.2 kg from which magnetic particles had been separated, was collected via the outlet port **10**. There was hardly any damage to the collected PET film.

While the present invention has been discussed in terms of the preferred embodiments, the present invention should be implemented in various fashions with incorporating modifications of the disclosed embodiments in addition, omission or modification of the detailed construction, without departing from the principle of the invention. Therefore, the present invention should be understood to include all embodiments encompassed within the spirit of the invention set out in the appended claims.

## Claims

1. A method for separating magnetic particles from a magnetic film waste and collecting the magnetic particles and a base film thereof separately, comprising the following steps of:
providing said magnetic film waste for a container having a polygonal transverse cross-section;
providing treatment liquid including a plurality of solvents therein for said container;
stirring said magnetic film waste and said treatment liquid in said container using stirring means having a rotation shaft and a plurality of stirring members, said rotation shaft vertically disposed at the bottom of said container, said stirring members perpendicularly projecting from said rotation shaft;
discharging a mixture of said magnetic particles and said treatment liquid out of said container; and
collecting said magnetic film waste from which the magnetic particles are removed.

2. A method as set forth in claim 1, wherein said transverse cross-section of said container is selected from among a triangular, a square, or a pentagonal shape.

3. A method as set forth in claim 1, a lower portion of said container defined as a reversed conical portion with an inner diameter thereof gradually reduced in a downward direction.

4. A method as set forth in claim 1, wherein said stirring means is removably disposed in said container.

5. A method as set forth in claim 1, wherein said stirring members comprise a plurality of elongated plate members horizontally projecting from said rotation shaft.

6. A method as set forth in claim 5, wherein each of said elongated plate members comprises a plurality of teeth-like projections provided along the outer periphery thereof.

7. A method as set forth in claim 1, wherein said stirring members comprise a plurality of frame members, each of said frame members substantially formed into a polygonal shape, respective end portions of said frame member fastened to said rotation shaft with longitudinally spaced apart.

8. A method as set forth in claim 1, a distance between end portions of said stirring members and an inner surface of said container being set constant along a longitudinal direction of said rotation shaft.

9. A method as set forth in claim 1, said treatment liquid comprises esters, ketones, aromatic solvents, and a surface active agent.

10. A method as set forth in claim 1, wherein a rotational speed of said stirring means is set within the range of from 250 to 800 rpm.

11. A method as set forth in claim 1, wherein said stirring means is rotated in a normal and a reverse directions alternatively.

12. A method as set forth in claim 1, wherein said container and/or said stirring means is grounded so that said container, rotation shaft, and stirring member are not electrostatically charged.

13. An apparatus for separating magnetic particles from a magnetic film waste and collecting the magnetic particles and a base film thereof separately, comprising:
a container having a polygonal transverse cross-section; and
stirring means having a rotation shaft and a plurality of stirring members, said rotation shaft vertically disposed at the bottom of said container, said stirring members perpendicularly projecting from said rotation shaft.

14. An apparatus as set forth in claim 13, wherein said transverse cross-section of said container is selected from among a triangular, a square, or a pentagonal shape.

15. An apparatus as set forth in claim 13, a lower portion of said container defined as a reversed conical portion with an inner diameter thereof gradually reduced in a downward direction.

16. An apparatus as set forth in claim 13, wherein said stirring means is removably disposed in said container.

17. An apparatus as set forth in claim 13, wherein said stirring members comprise a plurality of elongated plate members horizontally projecting from said rotation shaft.

18. An apparatus as set forth in claim 17, wherein each of said elongated plate members comprises a plurality of teeth-like projections provided along the outer periphery thereof.

19. An apparatus as set forth in claim 13, wherein said stirring members comprise a plurality of frame members, each of said frame members substantially formed into a polygonal shape, respective end portions of said frame member fastened to said rotation shaft with longitudinally spaced apart.

20. An apparatus as set forth in claim 13, a distance between end portions of said stirring members and an inner surface of said container being set constant along a longitudinal direction of said rotation shaft.

21. An apparatus as set forth in claim 13, wherein a rotational speed of said stirring means is set within the range of from 250 to 800 rpm.

22. An apparatus as set forth in claim 13, wherein said stirring means is rotated in a normal and reveres directions alternatively.

23. An apparatus as set forth in claim 13, wherein said container and/or said stirring means is grounded so that said container, rotation shaft, and stirring member are not electrostatically charged.

24. An apparatus as set forth in claim 13, wherein cooling means is provided with said container so as to cool said container and contents therein.

25. A method for separating magnetic particles from a magnetic film waste and collecting the magnetic particles and a base film thereof separately, comprising the following steps of:
providing said magnetic film waste for a processing tank having a transverse cross-section selected from among a triangular, a square, or a pentagonal shape, a lower portion thereof defined as a reversed conical portion with an inner diameter thereof gradually reduced in a downward direction;
providing treatment liquid including esters, ketones, aromatic solvents, and a surface active agent therein for said processing tank;
stirring said magnetic film waste and said treatment liquid in said processing tank using stirring means having a rotation shaft and a plurality of stirring members, said rotation shaft vertically disposed at the bottom of said processing tank, said stirring members perpendicularly projecting from said rotation shaft, a distance between tip end portions of said stirring members and an inner surface of said processing tank arranged constant along a longitudinal direction of said rotation shaft, said rotation shaft rotated in a normal and reverse directions alternatively;
discharging a mixture of said magnetic particles and said treatment liquid out of said processing tank; and
collecting said base film from which the magnetic particles are removed.

26. An apparatus for separating magnetic particles from a magnetic film waste and collecting the magnetic particles and a base film thereof separately, comprising:
a processing tank having a transverse cross-section selected from among a triangle, a rectangle and a pentagon, including a lower portion defined as a reversed conical portion with an inner diameter thereof gradually reduced in a downward direction;
a pair of inlet ports through which the magnetic film waste and the treatment liquid are put into said processing tank respectively, both inlet ports disposed at an upper surface of a lid covering a top opening of said processing tank;
an outlet port for taking out the processed film and a discharging port for the liquid mixture containing magnetic particles, both arranged at the bottom portion of said processing tank; and
a rotor disposed in said processing tank, said rotor having a rotation shaft and a plurality of stirring members, said rotation shaft vertically disposed at the bottom of said processing tank, said stirring members perpendicularly projecting from said rotation shaft, a distance between end portions of said stirring members and an inner surface of said processing tank being set constant along a longitudinal direction of said rotation shaft.

27. An apparatus as set forth in claim 26, wherein a cooling water jacket is provided with said processing tank so as to cool said magnetic film waste and said treatment liquid therein.
